# EUROPÄISCHE PATENTSCHRIFT

(11) **EP 1 121 257 B1**
(45) Veröffentlichungstag und Bekanntmachung des Hinweises auf die Patenterteilung: **21.05.2003**
(21) Anmeldenummer: 00956372.7
(22) Anmeldetag: 01.08.2000
(51) Int. Cl.: B60B 33/02

(54) **LENKROLLE**
GUIDE ROLL
GALET DE DIRECTION

(30) Priorität: 21.08.1999 DE 29914681 U
(43) Veröffentlichungstag der Anmeldung: 08.08.2001
(73) Patentinhaber: TENTE-ROLLEN GmbH & Co., D-42929 Wermelskirchen (DE)
(72) Erfinder: MILBREDT, Manfred, 42859 Remscheid (DE)
(74) Vertreter: Müller, Enno, Dipl.-Ing.
(86) Internationale Anmeldenummer: EP0007434
(87) Internationale Veröffentlichungsnummer: WO01014153

(56) Entgegenhaltungen:
- DE-A- 1 755 789
- DE-A- 2 347 900
- DE-A- 2 721 375
- DE-A- 4 318 546
- US-A- 5 303 450
- US-A- 5 774 936

## Beschreibung

Die Erfindung bezieht sich auf eine Lenkrolle gemäß Oberbegriff des Anspruchs 1 wie aus DE-A-27 21 375 bekannt.

Weitere Lenkrollen mit Feststellvorrichtung dieser Art sind in vielfältigen Ausprägungen bekannt; es sei z. B. auf die DE-A-17 55 789 und DE-A-23 47 900 verwiesen. Diese Vorläufer sehen als nutzbare Funktionsstellungen vor, daß die Gabel und das Laufrad blockiert sind, ferner die Gabel verschwenkt werden und das Laufrad frei rollen kann - die Nachlaufseite bildet sich dabei von selbst -, schließlich eine Stellung, in der die Schwenkbewegung der Gabel blockiert ist und die Rolle frei drehen kann. Auf diese Weise wird eine Lenkrolle praktisch zu einer Bockrolle. Der Betätigungs-Stößel, über einen seine Achse querenden Schaltnocken in die unterschiedlichen Positionen steuerbar, steht in Rückholrichtung unter Wirkung einer auf den Stößelschaft aufgesteckten, sich an einem Gabelzapfen abstützenden Schraubengang-Druckfeder. Beide genannten Vorläufer sind durch Vielteiligkeit fertigungs- und montageaufwendig.

Aufgabe der Erfindung ist es, eine gattungsgemäße Lenkrolle baulich einfacher und montagegünstiger zu gestalten.

Diese Aufgabe ist zunächst und im wesentlichen bei einer Lenkrolle mit einer Feststellvorrichtung mit den Merkmalen des Anspruchs 1 gelöst durch ein Kombinationsteil, an welchem sowohl die Lenkblockierungs-Gegenvorsprünge als auch die Bremsblockierungsmittel ausgebildet sind, die in zueinander distanzierten Ebenen liegen, wobei die Brems- bzw. Lenkblockierungsausformung des Stößels sich in einer Neutralstellung zwischen diesen Ebenen befindet. Über ein solches Kombinationsteil wird die Teilezahl reduziert. Es übernimmt zudem Aufgaben, die über die Krafteinleitung des Stößels hinausgehen. Zudem kommt es zu einer gegenseitigen Stabilisierung der genannten Elemente. Das alles vereinfacht auch die Montage. Der Schaltungsausgang befindet sich in einer Neutralstellung, aus der die Brems- bzw. Lenkblockierungsausformung in kürzestem Hub gegenläufig verlagerbar ist, um in die jeweils andere Funktionsstellung zu gelangen. Von Vorteil ist sodann, daß das Kombinationsteil als Integralteil ausgebildet ist. Das läßt sich formtechnisch bestens beherrschen. Es ist demgemäß nicht erforderlich, das Kombinationsteil aus mehreren Einzelteilen zu einer Baueinheit zusammenzusetzen. Ein solches multifunktionales Kombinationsteil ist geschützt in einem Innenraum der Gabel frei beweglich, jedoch drehblockiert aufgenommen. Die Drehblockierung läßt sich leicht erreichen durch Nutzung des von Hause aus in aller Regel vorliegenden Parallelverlaufs der Gabelschenkel als Führungsflächen. Die Bewegung ist vertikal orientiert. Das Kombinationsteil ist praktisch bloß eingehängt und noch gesichert. Diesbezüglich ist vorgesehen, daß das Kombinationsteil an dem Stößel befestigt ist. Die Befestigung ist federnd ausgebildet. Die Feder fungiert als Verbindungselement zwischen dem Kombinationsteil und dem Stößel. Aus Gründen einer langlebigen Funktionalität wird eine Befestigungs-Drahtfeder vorgesehen, die im Befestigungszustand in einer Umfangsnut des Stößels einliegt. Die entsprechende Fesselung ist ohne die klassischen Befestigungsmittel erreichbar, indem der Stößel laufradseitig einen Einführkonus aufweist, dies zur Auslenkung der Drahtfeder im Zuge einer Rastmontage. Baulich liegt eine vorteilhafte Lösung vor, wenn die Befestigungs-Drahtfeder ein U-Bügel ist, dessen U-Steg eine etwa der halben Umfangsnut folgende Auslenkung aufweist. Letztere wird im Bereich ihres Nischenraumes sicher eingefangen. Zuordnungstechnisch vorteilhaft ist dabei, daß die U-Schenkel der Befestigungs-Drahtfeder in Haltenuten des Kombinationsteils aufgenommen sind. Weiter besteht ein günstiges Merkmal der Erfindung darin, daß das Kombinationsteil einen an die Laufradkrümmung angepaßten Bremsabschnitt aufweist, der unterhalb der Ebene des Bremsblockierungsmittels ausgebildet ist. Hierdurch sind exponierte Brems-Eindrückkanten vermieden. Die eigentliche Bremsfläche kann noch mit Rauhungen versehen sein, wie bspw. einer raumparallel zur geometrischen Achse des Laufrades liegenden Querrippung. Sodann ist vorgesehen, daß die Drahtfeder eine zwischen der Brems- bzw. Lenkblockierungsausformung und dem Bremsabschnitt ausgebildete Kammer durchsetzt. Die ist laufradabgewandt offen, so daß die Drahtfeder jederzeit lösezugänglich ist. Die Montage wird so erleichtert, auch eine etwaige Demontage. Nach Demontage des Laufrades kann nämlich das Kombinationsteil einfach in der Stößelaxialen abgezogen und durch ein neues Kombinationsteil ersetzt werden. Für eine Feinabstimmung der Feststellvorrichtung erweist es sich als günstig, daß an dem Kombinationsteil eine Einstellschraube vorgesehen ist zur Abstützung und Einstellung des Kombinationsteils gegen einen oberhalb der Kammer angeordneten Lager- oder Gabelabschnitt der Lenkrolle.

Die Einstellung ist entsprechend stufenlos. Konkret ist dabei so vorgegangen, daß die Einstellschraube in der Ebene der Lenkblockierungsmittel in dem Kombinationsteil gewindemäßig aufgenommen ist. Die Einstellschraube ist insoweit auch geschützt untergebracht. Dabei wird weiter so vorgegangen, daß in der Ebene der Bremsblockierungsmittel eine Durchgriffsöffnung ausgebildet ist zum Betätigungszugang der Einstellschraube. Schließlich bringt die Erfindung in Vorschlag, daß die Lenkblockierungs-Gegenvorsprünge auf mindestens eine Position definierende Drehblockierung der Gabel eingerichtet sind. Ein über die 360° Einraststellung hinausgehende Drehraststellung würde dann in der Diametralen liegen. Endlich erweist es sich als vorteilhaft, daß die Drehblockierung zwischen der Brems- bzw. Lenkblockierungsausformung und dem laufradnäheren Bremsblockierungsmittel auf eine feinstufige Drehblockierung hin ausgebildet ist. Dabei wird nicht nur das Laufrad abgebremst, sondern auch zugleich die Drehbewegung der Gabel aufgehoben. Es kann sich hier um einen klassischen radial orientierten Zahn-/Lückeneingriff handeln.

Der Gegenstand der Erfindung ist nachstehend anhand eines zeichnerisch veranschaulichten Ausführungsbeispieles näher erläutert. Es zeigt
- Fig. 1: einen Vertikalschnitt durch die Lenkrolle bei in einer Neutralstellung befindlichem Stößel,
- Fig. 2: einen gleichen Schnitt, bei in einer Drehblokkierungsstellung befindlichem Stößel,
- Fig. 3: einen ebensolchen Schnitt, bei in einer Bremsstellung befindlicher Stößelstellung und zugleich auftretender Drehblockierung der Gabel der Lenkrolle,
- Fig. 4: das Kombinationsteil in isolierter Wiedergabe, in die Kammer desselben gesehen, mit zugeordneter Drahtfeder,
- Fig. 5: den Schnitt gemäß Linie V-V in Fig. 4, federunbestückt,
- Fig. 6: die Draufsicht auf Fig. 5,
- Fig. 7: die Draufsicht auf die Befestigungs-Drahtfeder, die U-förmige Gestalt zeigend,
- Fig. 8: eine Ansicht gegen die Schmalseite der Drahtfeder,
- Fig. 9: eine Ansicht gegen den einen U-Schenkel der Drahtfeder gesehen.
- Fig. 10: den Betätigungs-Stößel in isolierter Wiedergabe, und zwar in Seitenansicht,
- Fig. 11: den Schnitt gemäß Linie XI-XI in Fig. 10,
- Fig. 12: die Draufsicht auf den Stößel,
- Fig. 13: die Unteransicht des Stößels.

Die dargestellte Lenkrolle 1 ist mit einer Feststellvorrichtung V versehen. Hierüber läßt sich eine Laufund/oder Lenkblockierung bewirken.

Die Laufblockierung setzt sich entsprechend in ein Bremsen eines Laufrades 2 um; die Lenkblockierung geht dagegen auf die Festlegung einer drehbar zugeordneten Gabel 3.

Das Laufrad 2 dreht um eine horizontale geometrische Achse x-x. Die entsprechende körperliche Achse trägt das Bezugszeichen 4.

Die Gabel 3 schwenkt um eine vertikale geometrische Achse y-y. Die verkörpert sich durch einen ummantelten Zapfen 5. Der steckt, gegen Drehung gesichert, in einer Aufnahmehöhlung des mit den Lenkrollen 1 versehenen verfahrbaren Gegenstandes.

Die geometrischen Achsen x-x und y-y sind so weit räumlich beabstandet, daß die erstrebte lenkrollentypische Lenkbarkeit gegeben ist. In der zeichnerischen Darstellung liegt die Nachlaufseite links.

Der Zapfen 5 geht von der Oberseite eines Lagers, bevorzugt eines Kugellagers 6 aus. Zwischen dessen oberem Ring 7 und unterem Ring 8 ist ein Lochrand 9 eines Gabelgrundes 10 der Gabel 3 drehlagernd gefaßt und abgestützt.

Den Zapfen 5 durchsetzt ein Stößel 11. Der weist, wie aus Fig. 12 hervorgeht, unrunden Querschnitt auf. Eine axial orientierte Führungsaufnahme 12 im Zapfen 5 besitzt konturentsprechenden Querschnitt. Der Stößel 11 weist demgemäß eine Drehsicherung auf und ist ausschließlich vertikal in der Achse y-y verlagerbar.

Das obere Ende des Stößels 11 geht in einen schraubtechnisch zugeordneten Stößelkopf 13 über. Der wird mittels eines Schaltnockens 14 beaufschlagt. Letzterer lagert drehbetätigbar um eine horizontale geometrische Achse z-z. Im Zentrum des Schaltnockens 14 liegt eine hexagonale Durchbrechung 15. In die greift eine entsprechend querschnittsgestaltete Schaltwelle 16 einer nicht weiter dargestellten Betätigungseinrichtung ein.

Die Stirnfläche des im Grunde scheibenförmig gestalteten Schaltnockens 14 weist unterschiedlich achsbeabstandete Vertiefungen 17 auf, in die ein Vorsprung 18 des Stößelkopfes 13 abtastend eingreift.

Den entsprechenden Anlagedruck erhält man über die Kraft einer Druckfeder 19. Die belastet über ihre obere endständige Federwindung den Stößelkopf 13. Die andere, untere endständige Federwindung findet ihr lenkrollenseitiges Widerlager 20 in einer Ringkehle des oberen Endes des Zapfens 5. Den oberseitigen Gegenhalt erbringt eine ortsfeste Lagerstelle der Schaltwelle 16.

Das laufradabgewandte Ende 11' des Stößels 11 läßt sich in Bezug auf den Stößelkopf 13 axial verstellen, und zwar über einen Gewindeeingriff 21 beider Teile.

Das laufradseitige Ende 11'' des Stößels 11 durchsetzt das Loch im Bereich des Lagers, respektive Kugellagers 6 und reicht bis in den Unterflurbereich des Gabelgrundes 10. Dort geht das besagte Ende 11'' in eine Brems- bzw. Lenkblockierungsausformung 22 über. Es handelt sich um einen horizontal orientierten, in der Mantelwand des Stößels 11 wurzelnden Ringteller 23 mit praktisch zahnstrukturiertem Stirnrand. Es sei auf die Fig. 10, 12 und 13 verwiesen. Die Struktur besteht aus radial orientierten, den Tellerrand frei überragenden Vorsprüngen 24. Die sind in gleichen Winkelabständen angeordnet, jedoch von unterschiedlicher Breite. Die eine größere Breite aufweisenden Vorsprünge 24 erstrekken sich in einer gemeinsamen Diametralen D-D. Letztere fällt richtungsmäßig mit der Abflachung des Stößels 11 zusammen.

Der Lenkblockierungsausformung 22 des Stößels 11, respektive deren Vorsprüngen 24 sind Lenkblockierungs-Gegenvorsprünge 25 zugeordnet. Die sitzen an einem Kombinationsteil K. Die Lenkblockierungs-Gegenvorsprünge 25 stellen unter Belassung von Lücken entsprechend der Breite der Vorsprünge 24 eine passende Gegenkontur, in die der Ringteller 23 bei entsprechend eingriffsfähiger Ausrichtung und entsprechend angewandter Schaltstellung des Schaltnockens 14 einklinken kann.

Die Lenkblockierungs-Gegenvorsprünge 25 befinden sich in einem oberen Deck a des Kombinationsteils K.

Vertikal beabstandet dazu erstreckt sich ein unteres Deck b. An dem sind Brems- und Lenkblockierungsmittel 26 realisiert. Die liegen betätigungsstößelzugänglich und konkretisieren sich in Form eines Bremsabschnitts 27.

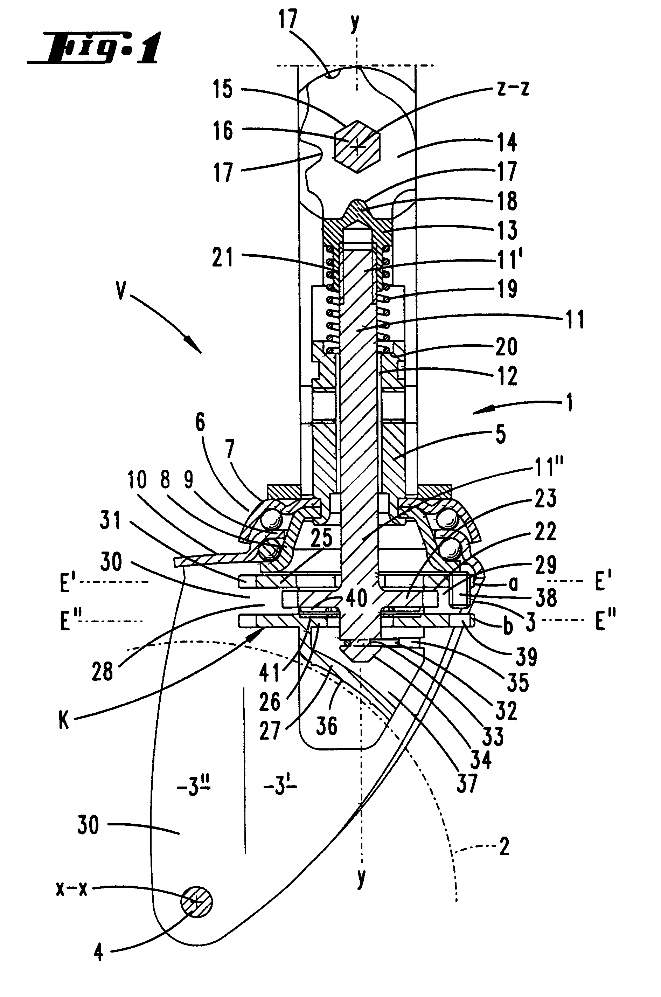

Stößel 11 und vertikal verlagerbares Kombinationsteil K sind bei entsprechender Schaltstellung des Schaltnokkens 14 höhenmäßig so gestellt, daß die Brems- bzw. Lenkblockierungsausformung 22 des Stößels 11 sich in einer Neutralstellung (Fig. 1) befindet, d. h. der Ringteller 23 erstreckt sich berührungsfrei zwischen den beiden Decks a, b, also zwischen den distanzierten Ebenen beider, die zwischen sich einen ausreichenden Freiraum 28 belassen. Die Ebenen sind bezeichnet mit E'-E' bzw. E''-E''.

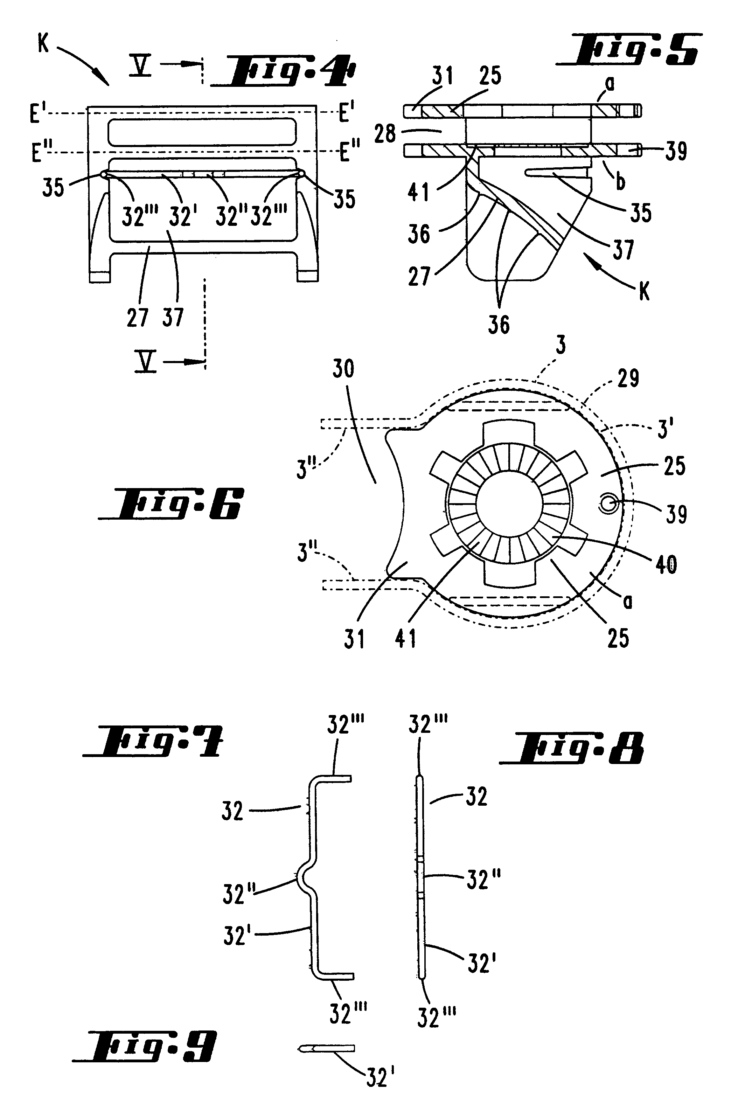

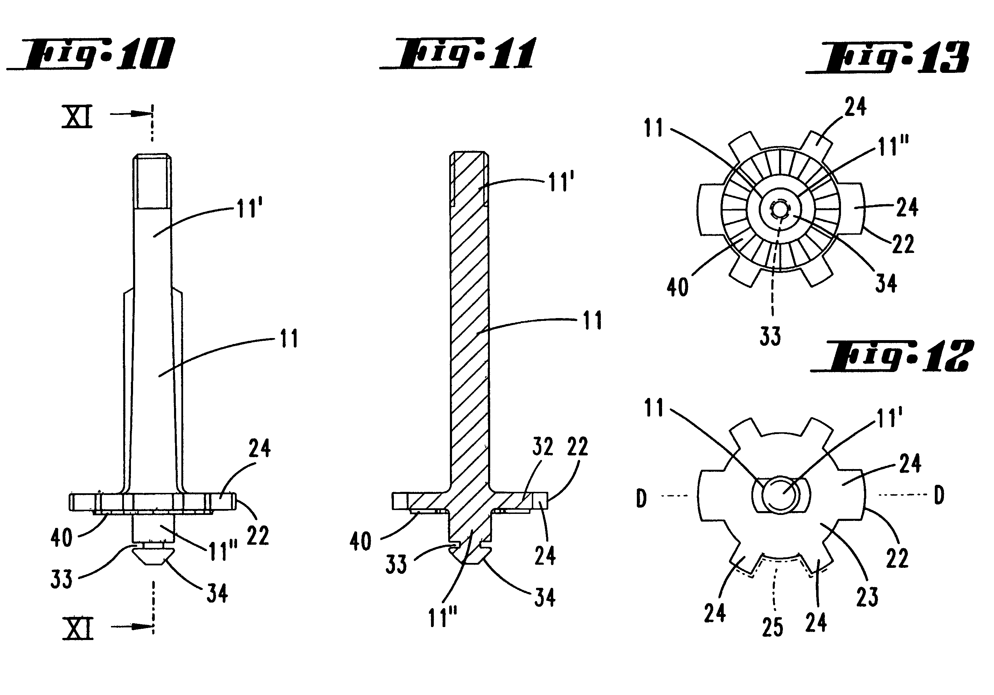

Das als Integralteil ausgebildete Kombinationsteil K, bspw. ein Kunststoff-Spritzling, findet in einem Innenraum 29 der Gabel 3 eine Aufnahme dergestalt, daß es vertikal frei beweglich, jedoch drehblockiert aufgenommen ist. Hierzu ist die Querschnittsform der Gabel 3 genutzt. Die setzt sich zumindest bezüglich einer Innenkontur aus einem kreiszylindrischen Abschnitt 3' und zwei auswärts führenden, flügelartigen, geraden, parallelverlaufenden Abschnitten 3'' zusammen. Der erstgenannte Abschnitt 3' geht gut über drei Viertel eines Kreisabschnitts und öffnet via Parallelabschnitte 3''. Die entsprechende Öffnung trägt das Bezugszeichen 30 (vergl. Fig. 6). In diese ragt eine den kreisförmigen Umriß der vertikal stegverbundenen Decks a und b überragender Vorsprung 31. Der wirkt erkennbar drehsperrend.

Das Kombinationsteil K ist also geführt und überdies ausschließlich am Stößel 11 befestigt. Es handelt sich um eine hängende Zuordnung im führend wirkenden Innenraum 29 und der drehsichernden Öffnung 30 der Gabel 3. Die Befestigung ist federnd ausgebildet, d. h. es sind Relativbewegungen zwischen dem Stößel 11 und dem Kombinationsteil K nicht unterbunden. Zur entsprechenden Befestigung dient eine Drahtfeder 32. Die liegt im Befestigungszustand in einer Umfangsnut 33 des Stößels 11, genauer des laufradseitigen Endes 11'' desselben ein. Besagtem Ende 11'' ist laufradseitig ein Einführkonus 34 vorgeschaltet. Der lenkt den freigespannten U-Steg 32' der in Form eines U-Bügels gestalteten Drahtfeder 32 aus, so daß sich eine bequeme Rastmontage ergibt. Bezüglich der Bügelgestalt der Befestigungs-Drahtfeder 32 sei auf Fig. 7 verwiesen. Dort ist auch erkennbar, daß der U-Steg 32' der Drahtfeder 32 eine etwa der halben Umfangsnut 33 folgende Auslenkung 32'' aufweist. Deren Innenkontur entspricht im wesentlichen dem Durchmesser des Nutgrundes der Umfangsnut 33.

Erkennbar in der genannten Figur sind auch die gleichgerichtet abgewinkelten U-Schenkel, bezeichnet mit 32'''. Letztere sind in passenden, horizontal orientierten Haltenuten 35 des Kombinationsteils K aufgenommen. Die Haltenuten 35 selbst bilden den Einschubbegrenzungsanschlag durch das jeweilige Nutende. Die Nutenden liegen so, daß der U-Steg 32' die Achse y-y schneidet. Der Eingang der Haltenuten 35 kann bezüglich ihrer Flanken nach auswärts hin leicht divergieren, so daß das Einführen erleichtert ist. Die U-Schenkel 32''' sind zweckmäßig leicht ausgestellt. Sie wirken so klemmend bzw. verkrallend zu den Haltenuten 35.

Das dortige Ende des Stößels 11 selbst sichert überdies den lediglich steckzugeordneten Drahtkörper gegen Verlieren, da es sich sperrend vor den U-Steg 32' legt, der sich auf der Nachlaufseite der Lenkrolle 1 erstreckt.

Wie weiter der zeichnerischen Darstellung entnehmbar, weist das Kombinationsteil K einen an die Laufradkrümmung angepaßten Bremsabschnitt 27 auf. Der Bremsabschnitt 27 erstreckt sich unterhalb der Ebene E''-E'', also der des Bremsblockierungsmittels 26. Der Bremsabschnitt 27 trägt der Lauffläche des Laufrades 2 zugewandte Querrippen 36 mit entsprechend bremsverstärkender Wirkung.

Der Rücken der den Bremsabschnitt 27 stellenden Wandung bildet den unteren Abschluß einer zwickelseitig offenen Kammer 37, die im oberen Bereich vom U-Steg 32' der Befestigungs-Drahtfeder 32 durchsetzt ist. Die den Federkörper fesselnde Nut 35 liegt so beabstandet, daß auch noch eine aufwärts gerichtete Bewegung des Stößels 11 erreichbar ist.

Die in Grundstellung im Freiraum 28 weilende Brems- bzw. Lenkblockierungsausformung 22 ist bezüglich ihrer Einstellung einjustierbar. Hierzu ist an dem Kombinationsteil K eine Einstellschraube 38 vorgesehen. Die stützt das am Stößel 11 gleichsam aufgehängte Kombinationsteil K gegen den oberhalb der Kammer 37 angeordneten Lager- oder Gabelabschnitt der Lenkrolle 1, also dem unteren Ring 8 des Kugellagers 6 ab.

Erkennbar ist die Einstellschraube 38 in der Ebene E'-E' der Lenkblockierungsmittel, der Vorsprünge 24, in dem Kombinationsteil K gewindemäßig aufgenommen. Die Einstellschraube 38 ragt mit ihrem betätigungsseitigen Ende noch in den Freiraum 28 hinein. Zu deren Einstellzugänglichkeit ist in der Ebene E''-E'' der Bremsblokkierungsmittel 26 eine Durchgriffsöffnung 39 für ein am Stellwerkzeug Deck b ausgebildet.

Bezüglich der Bremsblockierungsmittel 26 bleibt noch auszuführen, daß die Drehblockierung zwischen der Brems- bzw. Lenkblockierungsausformung 22 und dem laufradnäheren Bremsblockierungsmittel 26 auf eine feinstufige Drehblockierung hin ausgebildet ist. So gehen dort von der Unterseite des Ringtellers 23 radial orientierte Zähne 40 eines Zahnkranzes aus. Die erstreckt sich konzentrisch zum Stößel 11. Besagte Zähne 40 wirken mit Zahnlücken 41 an der Oberseite der Bremsblokkierungsmittel 26 zusammen, und zwar in Form eines kongruent liegenden Gegenzahnkranzes.

Die Funktion der Lenkrolle mit Feststellvorrichtung V ist wie folgt: In Fig. 1 erbringt die dortige Schaltstellung ein freies Verschwenken der Gabel 3 und ein freies Verrollen des Laufrades 2. In dieser Stellung ist die Brems- bzw. Lenkblockierungsausformung 22 aus dem Wirkungsbereich der Lenkblockierungs-Gegenvorsprünge 25 ebenso herausgetreten wie aus dem Bereich der Bremsblockierungsmittel 26. Der Stößel 11 findet seinen diesbezüglichen exakten Anschlag an dem Schaltnokken 14, in dessen Richtung er durch die Feder 19 belastet ist. Feineinstellungen können, wie geschildert, über die Einstellschraube 38 vorgenommen sein. Die Drahtfeder 32 hält das Kombinationsteil K in vertikaler Richtung exakt in Position.

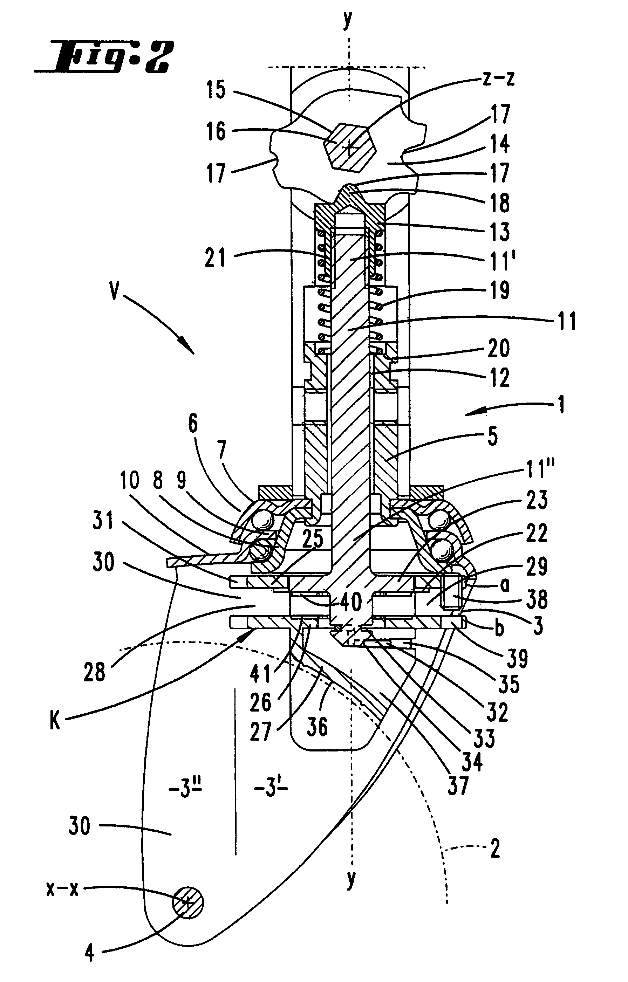

Durch Drehen des Schaltnockens 14 in die nächste Stellung ergibt sich die aus Fig. 2 hervorgehende, in der ausschließlich die Schwenkbewegung der Gabel 3 blokkiert ist. Die Feder 19 hat den in entsprechendem Hubmaß freigegebenen Stößel 11 nach oben verlagert. Die Lenkblockierungsausformung 22 gelangt sperrwirkend in die Lenkblockierungs-Gegenvorsprünge 25. Die Drahtfeder 32 wird dabei im Bereich ihres U-Steges 32' nach oben durchgewölbt, also gespannt. Die Kraft der Druckfeder 19 ist jedoch größer. Das Kombinationsteil K kann nicht mit nach oben verlagert werden, da es sich via Einstellschraube 38 am Kugellager 6 abstützt. Das Laufrad 2 ist frei drehbar.

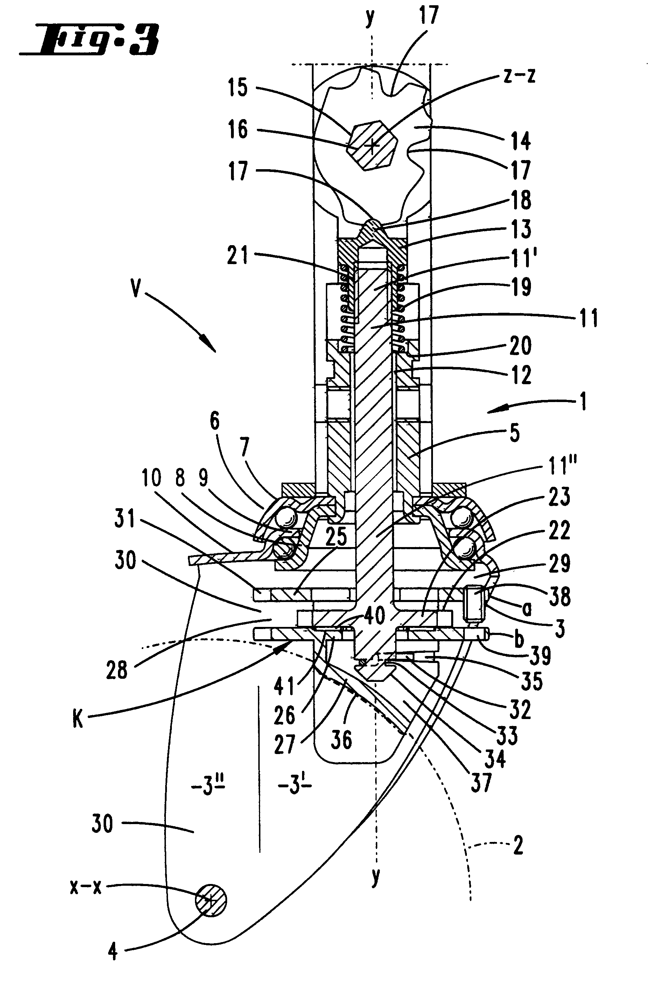

Fig. 3 zeigt eine Stellung, in der das Laufrad 2 gebremst bzw. drehblockiert ist. Das Bremsblokkierungsmittel 26 ist in die Lauffläche des Laufrades 2 gepreßt. Die Abwärtsverlagerung des Kombinationsteils K geschieht durch entsprechend abwärts gerichtete Verlagerung des Stößels 11, dessen Ringteller 23 gegen die Oberseite des Bremsblockierungsmittels 26 tritt. Auch das geschieht entgegen der Rückstellkraft der Druckfeder 19 wie auch der Befestigungs-Drahtfeder 32. Zugleich bzw. überlagernd ober anschließend gelangen auch die Zähne 40 in die Zahnlücken 41, so daß nicht nur das Laufrad 2 gebremst ist, sondern auch die Drehung der Gabel 3 unterbunden ist. Wenn Zahn auf Zahn aufsetzen, ergibt sich die rastaktive Stellung bei dem leicht auftretenden Restschwenken der Gabel 3. Es kommt dann zu einem Einschnäppern der drehsichernden Mittel. Auch diese Stellung ist schalttechnisch durch Drehverlagerung des Schaltnockens 14 gegeben.

Die die Funktion einer Bockrolle erbringende Drehblokkierung der Gabel 3 wird über die breiteren Vorsprünge 24 erreicht, die in angepaßt breitere Lücken der Lenkblockierungs-Gegenvorsprünge 25 eingreifen. Es liegt zumindest eine solche Einrastposition vor. Die orientiert sich an einer Hauptausrichtung des verfahrbaren Gegenstandes.

## Patentansprüche

1. Lenkrolle (1) mit einer Feststellvorrichtung (V) zur Laufblockierung und Lauf-Lenk-Blockierung des in einer Gabel (3) gelagerten Laufrades (2), welche Gabel (3) selbst um eine vertikale Achse (y-y) schwenkbar gelagert ist, mit einem um die vertikale Achse (y-y) nicht Schwenkbaren Betätigungs-Stößel (11), an dessen laufradseitigem Ende (11'') eine Brems- bzw. Lenkblockierungsausformung (22) ausgebildet ist, wobei der Stößel (11) weiter mit Lenkblockierungs-Gegenvorsprüngen (25) zusammenwirkt, **gekennzeichnet durch** ein Kombinationsteil (K), an welchem sowohl die Lenkblokkierungs-Gegenvorsprünge (25) als auch die Bremsblokkierungsmittel (26) ausgebildet sind, die in zueinander distanzierten Ebenen (E'-E', E''-E'') liegen, wobei die Brems- bzw. Lenkblockierungsausformung (22) des Stößels (11) sich in einer Neutralstellung gegenüber der Gabel (3) um die vertikale Achse (y-y) drehblockierten zwischen diesen Ebenen befindet.

2. Lenkrolle mit Feststellvorrichtung nach Anspruch 1 oder insbesondere danach, **dadurch gekennzeichnet, daß** das Kombinationsteil (K) als Integralteil ausgebildet ist.

3. Lenkrolle mit Feststellvorrichtung nach einem oder mehreren der vorhergehenden Ansprüche, **dadurch gekennzeichnet, daß** das Kombinationsteil (K) in einem Innenraum (29) der Gabel (3) frei beweglich, jedoch drehblockiert aufgenommen ist.

4. Lenkrolle mit Feststellvorrichtung nach einem oder mehreren der vorhergehenden Ansprüche, **dadurch gekennzeichnet, daß** das Kombinationsteil (K) an dem Stößel (11) befestigt ist.

5. Lenkrolle mit Feststellvorrichtung nach Anspruch 4, **dadurch gekennzeichnet, daß** die Befestigung federnd ausgebildet ist.

6. Lenkrolle mit Feststellvorrichtung nach einem oder mehreren der vorhergehenden Ansprüche 4 bis 5, **dadurch gekennzeichnet, daß** eine Befestigungs-Drahtfeder (32) vorgesehen ist, die im Befestigungszustand in einer Umfangsnut (33) des Stößels (11) einliegt.

7. Lenkrolle mit Feststellvorrichtung nach Anspruch 6, **dadurch gekennzeichnet, daß** der Stößel (11) laufradseitig einen Einführkonus (34) aufweist zur Auslenkung der Drahtfeder (32) im Zuge einer Rastmontage.

8. Lenkrolle mit Feststellvorrichtung nach einem oder mehreren der vorhergehenden Ansprüche 6 bis 7, **dadurch gekennzeichnet, daß** die Befestigungs-Drahtfeder (32) ein U-Bügel ist, dessen U-Steg (32') eine etwa der halben Umfangsnut (35) folgende Auslenkung (32'') aufweist.

9. Lenkrolle mit Feststellvorrichtung nach Anspruch 8, **dadurch gekennzeichnet, daß** die U-Schenkel (32"') des U-Bügels der Befestigungs-Drahtfeder (32) in Haltenuten (35) des Kombinationsteils (K) aufgenommen sind.

10. Lenkrolle mit Feststellvorrichtung nach einem oder mehreren der vorhergehenden Ansprüche, **dadurch gekennzeichnet, daß** das Kombinationsteil (K) einen an die Laufradkrümmung angepaßten Bremsabschnitt (27) aufweist, der unterhalb der Ebene (E"-E'') des Bremsblockierungsmittels (26) ausgebildet ist.

11. Lenkrolle mit Feststellvorrichtung nach einem oder mehreren der vorhergehenden Ansprüche 6 bis 9, **dadurch gekennzeichnet, daß** die Befestigungs-Drahtfeder (32) eine zwischen der Brems- bzw. Lenkblokkierungsausformung (22) und einem Bremsabschnitt (27) ausgebildete Kammer (37) durchsetzt.

12. Lenkrolle mit Feststellvorrichtung nach Anspruch 11, **dadurch gekennzeichnet, daß** an dem Kombinationsteil (K) eine Einstellschraube (38) vorgesehen ist zur Abstützung und Einstellung des Kombinationsteils (K) gegen einen oberhalb der Kammer (37) angeordneten Lager- oder Gabelabschnitt der Lenkrolle (1).

13. Lenkrolle mit Feststellvorrichtung nach Anspruch 12, **dadurch gekennzeichnet, daß** die Einstellschraube (38) in der Ebene (E'-E') der Lenkblockierungsmittel, der Lenkblockierungs-Gegenvorsprünge (25), in dem Kombinationsteil (K) gewindemäßig aufgenommen ist.

14. Lenkrolle mit Feststellvorrichtung nach einem oder mehreren der vorhergehenden Ansprüche 12 bis 13, **dadurch gekennzeichnet, daß** in der Ebene (E''-E'') der Bremsblockierungsmittel (26) eine Durchgriffsöffnung (39) ausgebildet ist zum Betätigungszugang der Einstellschraube (38).

15. Lenkrolle mit Feststellvorrichtung nach einem oder mehreren der vorhergehenden Ansprüche, **dadurch gekennzeichnet, daß** die Lenkblockierungs-Gegenvorsprünge (25) auf mindestens eine Position definierende Drehblockierung der Gabel (3) eingerichtet sind.

16. Lenkrolle mit Feststellvorrichtung nach einem oder mehreren der vorhergehenden Ansprüche, **dadurch gekennzeichnet, daß** die Drehblockierung zwischen der Brems- bzw. Lenkblockierungsausformung (22) und dem laufradnäheren Bremsblockierungsmittel (26) auf eine feinstufige Drehblockierung hin ausgebildet ist.

## Claims

1. Caster (1) having a locking device (V) for blocking travel and for blocking travel and swivelling of a travel wheel (2) mounted in a fork (3), which fork (3) is itself pivotably mounted about a vertical axis (y-y), the caster having an actuation plunger (11) which is not pivotable about the vertical axis (y-y), a braking and swivelling-blocking formation (22) being provided at the travel wheel end (11") of the actuation plunger, the plunger (11) further co-operating with swivelling-blocking counter-projections (25) which block rotation relative to the fork (3) about the vertical axis (y-y), **characterized by** a combination part (K) on which both swivelling-blocking counter-projections (25) and also braking-blocking means (26) are provided, which are located in mutually spaced-apart planes (E'-E', E"-E"), the braking and swivelling-blocking formation (22) of the plunger (11) being disposed between these planes in a neutral position.

2. Caster with locking device according to Claim 1 or in particular according thereto, **characterized in that** the combination part (K) is formed as an integral part.

3. Caster with locking device according to one or more of the preceding claims, **characterized in that** the combination part (K) is accommodated in an interior space (29) of the fork (3) to be freely moveable, but is blocked against rotation.

4. Caster with locking device according to one or more of the preceding claims, **characterized in that** the combination part (K) is secured on the plunger (11).

5. Caster with locking device according to Claim 4, **characterized in that** the securing is provided in a spring-loaded manner.

6. Caster with locking device according to one or more of the preceding Claims 4 to 5, **characterized in that** a securing wire spring (32) is provided which engages in the securing condition in a peripheral groove (33) of the plunger (11).

7. Caster with locking device according to Claim 6, **characterized in that** the plunger (11) has on the travel wheel side a lead-in cone (34) for deflecting the wire spring (32) in the course of a latching mounting.

8. Caster with locking device according to one or more of the preceding Claims 6 to 7, **characterized in that** the securing wire spring (32) is a U-shaped member, the cross-bar (32') of the U having a deviation (32") following approximately half of the peripheral groove (35).

9. Caster with locking device according to Claim 8, **characterized in that** the legs (32'") of the U of the U-shaped member of the securing wire spring (32) are accommodated in retaining grooves (35) of the combination part (K).

10. Caster with locking device according to one or more of the preceding claims, **characterized in that** the combination part (K) has a braking section (27) matched to the curvature of the travel wheel, the braking section being provided underneath the plane (E"-E") of the braking-blocking means (26).

11. Caster with locking device according to one or more of the preceding Claims 6 to 9, **characterized in that** the securing wire spring (32) passes through a chamber (37) provided between the braking and swivelling-blocking formation (22) and a braking section (27).

12. Caster with locking device according to Claim 11, **characterized in that** an adjustment screw (38) is provided on the combination part (K) for support and adjustment of the combination part (K) against a bearing or fork section of the caster (1) disposed above the chamber (37).

13. Caster with locking device according to Claim 12, **characterized in that** the adjustment screw (38) is threadingly accommodated in the combination part (K) in the plane (E'-E') of the swivelling-blocking means, the swivelling-blocking counter-projections (25).

14. Caster with locking device according to one or more of the preceding Claims 12 to 13 **characterized in that** an access opening (39) is provided in the plane (E"-E") of the braking-blocking means (26) for access to the adjustment screw (38) to operation thereof.

15. Caster with locking device according to one or more of the preceding claims, **characterized in that** the swivelling-blocking counter-projections (25) are arranged for at least one position defining rotational blocking of the fork (3).

16. Caster with locking device according to one or more of the preceding claims, **characterized in that** the rotational blocking between the braking and swivelling-blocking formation (22) and the braking-blocking means (26) adjacent the travel wheel is provided as a result of rotation-blocking in fine steps.

## Revendications

1. Galet orientable (1) avec un dispositif de blocage (V) pour le blocage du roulement et du braquage de la roue mobile (2) montée à rotation dans une fourche (3), ladite fourche (3) elle-même étant montée à pivotement autour d'un axe vertical (y-y), avec un poussoir d'actionnement (11) ne pouvant pivoter autour de l'axe vertical (y-y), poussoir sur l'extrémité (11") située du côté de la roue mobile duquel est réalisé une saillie (22) de freinage et/ou de blocage du braquage, le poussoir (11) coopérant en outre avec des saillies conjuguées (25) de blocage de braquage bloquées en rotation autour de l'axe vertical (y-y) par rapport à la fourche (3), **caractérisé par** une partie de combinaison (K), sur laquelle sont réalisées des saillies conjuguées (25) de blocage de braquage ainsi qu'également des moyens (26) de blocage de frein, se situant dans des plans (E'-E', E"-E") espacés l'un de l'autre, la saillie (22) de freinage et/ou de blocage du braquage du poussoir (11) se trouvant en une position neutre, entre ces plans.

2. Galet orientable muni d'un dispositif de blocage selon la revendication 1 ou en particulier comme suit, **caractérisé en ce que** la partie de combinaison (K) est réalisée sous la forme de partie monobloc.

3. Galet orientable muni d'un dispositif de blocage selon l'une ou plusieurs des revendications précédentes, **caractérisé en ce que** la partie de combinaison (K) est logée dans un espace intérieur (29) de la fourche (3), de façon mobile librement, mais cependant bloquée en rotation.

4. Galet orientable muni d'un dispositif de blocage selon l'une ou plusieurs des revendications précédentes, **caractérisé en ce que** la partie de combinaison (K) est fixée sur le poussoir (11).

5. Galet orientable muni d'un dispositif de blocage selon la revendication 4, **caractérisé en ce que** la fixation est réalisée élastique.

6. Galet orientable muni d'un dispositif de blocage selon l'une ou plusieurs des revendications 4 à 5 précédentes, **caractérisé en ce qu'**un ressort de fixation en fil (32) est prévu, s'introduisant dans une gorge périphérique (33) du poussoir (11) à l'état de fixation.

7. Galet orientable muni d'un dispositif de blocage selon la revendication 6, **caractérisé en ce que** le poussoir (11) présente du côté de la roue mobile un cône d'insertion (34) pour ouvrir le ressort en fil (32) au cours d'un montage par encliquetage.

8. Galet orientable muni d'un dispositif de blocage selon l'une ou plusieurs des revendications 6 à 7 précédentes, **caractérisé en ce que** le ressort de fixation en fil (32) est un étrier en U, dont la base (32) du U présente une déformation (32') suivant à peu près la demi-gorge périphérique (35).

9. Galet orientable muni d'un dispositif de blocage selon la revendication 8, **caractérisé en ce que** les branches en U (32"') de l'étrier en U du ressort de fixation en fil (32) sont logées dans des gorges de maintien (35) de la partie de fixation (K).

10. Galet orientable muni d'un dispositif de blocage selon l'une ou plusieurs des revendications précédentes, **caractérisé en ce que** la partie de combinaison (K) présente un tronçon de freinage (27) adapté à la courbure de la roue mobile, et qui est réalisé au-dessous du plan (E"-E") des moyens (26) de blocage de frein.

11. Galet orientable muni d'un dispositif de blocage selon l'une ou plusieurs des revendications 6 à 9 précédentes, **caractérisé en ce que** le ressort de fixation en fil (32) traverse une chambre (37) réalisée entre la saillie de blocage de frein ou orientable et un tronçon de freinage (27).

12. Galet orientable muni d'un dispositif de blocage selon la revendication 11, **caractérisé en ce que**, sur la partie de combinaison (K), est prévue une vis de réglage (38), pour soutenir et régler la partie de combinaison (K) contre un tronçon de palier ou de fourche, disposé au-dessus de la chambre (37), du galet orientable (1).

13. Galet orientable muni d'un dispositif de blocage selon la revendication 12, **caractérisé en ce que** la vis de réglage (38) est logée par vissage dans la partie de combinaison (K), dans le plan (E-E') des moyens de blocage de braquage, des saillies conjuguées (25) de blocage de direction.

14. Galet orientable muni d'un dispositif de blocage selon l'une ou plusieurs des revendications 12 à 13 précédentes, **caractérisé en ce qu'**une ouverture d'accès (39) est réalisée dans le plan (E"-E") des moyens (26) de blocage de frein pour permettre l'accès en vue d'un actionnement à la vis de réglage (38).

15. Galet orientable muni d'un dispositif de blocage selon l'une ou plusieurs des revendications précédentes, **caractérisé en ce que** les saillies conjuguées (25) de blocage orientable sont réalisées sur un blocage en rotation, définissant au moins une position de la fourche (3).

16. Galet orientable muni d'un dispositif de blocage selon l'une ou plusieurs des revendications précédentes, **caractérisé en ce que** le blocage en rotation est réalisé, entre la saillie (22) de blocage de frein et/ou orientable et les moyens (26) de blocage de frein proches de la roue mobile, pour un blocage de rotation à étagement fin.
